# EUROPEAN PATENT SPECIFICATION

(11) **EP 4 047 221 B1**
(45) Date of publication and mention of the grant of the patent: **04.12.2024**
(21) Application number: 21201530.9
(22) Date of filing: 07.10.2021
(51) Int. Cl.: F16B 2/24, B60R 21/20, F16B 21/08

(54) **IMPROVED ERGONOMIC FASTENING CLIP**
VERBESSERTE ERGONOMISCHE BEFESTIGUNGSKLAMMER
PINCE DE FIXATION ERGONOMIQUE AMÉLIORÉE

(30) Priority: 18.01.2021 ES 202130026
(43) Date of publication of application: 24.08.2022
(73) Proprietor: Illinois Tool Works Inc., Glenview, IL 60025 (US)
(72) Inventor: COBACHO, Luis, Glenview 60025 (US)
(74) Representative: HGF

(56) References cited:
- EP-A1- 3 748 169
- WO-A1-2018/104421
- US-A1- 2013 302 087
- US-A1- 2018 209 454
- US-A1- 2020 166 061

## Description

The present invention generally relates to the field of fasteners and in particular, to the field of fastening clips for attaching one or more components, such as airbag devices, to an external structure. More specifically, the present invention relates to an ergonomic fastening clip for attaching a side-impact airbag or curtain-type airbag to a vehicle structure.

### Introduction

Airbags are safety devices that are increasingly being used in the motor industry and which, in combination with other safety components, such as seatbelts, help to reduce fatal accidents in the case of collisions. The tests to which the vehicles have been subjected, as well as, mortality statistics, have clearly demonstrated that the use of airbags can considerably improve the safety of automobile occupants and, when combined with other forms of passive safety, such as seat belts, significantly (by about 30%) reduce mortality in the case of serious accidents.

Today, manufacturers produce frontal airbags, which are designed to protect the driver and/ or passenger in the event of a head-on collision and, considering their positions, lateral airbags that are installed behind the posts and/or in the sides of the vehicle seats, along with curtain airbags.

Airbags of the curtain type are usually located in the part close to the roof on the sides of the automobile, e.g. situated above the front and rear doors. Such airbags have very rigorous requirements with regards to the goals set for them and the technical challenges that have to be overcome. Typical challenges may be their location in the vehicle and the way they are fastened, required deployment time and the time that the airbag is required to remain inflated. Other challenges may come from the fact that there is only a short distance between the body and the occupant and that there is little vehicle material between the occupant and an impacting vehicle. For example, it is essential that airbags are deployed in a fraction of a second, giving rise to an enormous snatch force on their attachment components, which then suffer the consequences of that impact.

Further, when installing new or restore previously deployed airbags, it is well known in the industry that the installation or restoration is tedious work, comprising steps, such as, (i) dismantling all the attachments of the airbag, (ii) replacing the airbag and installing a new one, and then again (iii) fitting all its attachments. The work involved generally requires the installer to at least partly manually assemble and install the airbag to the vehicle. During the assembly, the installer may have to push numerous fastening clips into a vehicle panel or structure to attach or operably couple the airbag to the vehicle. Such work steps can be very repetitive and potentially cause injuries to the installer if the component parts are not adequately designed for manual installation.

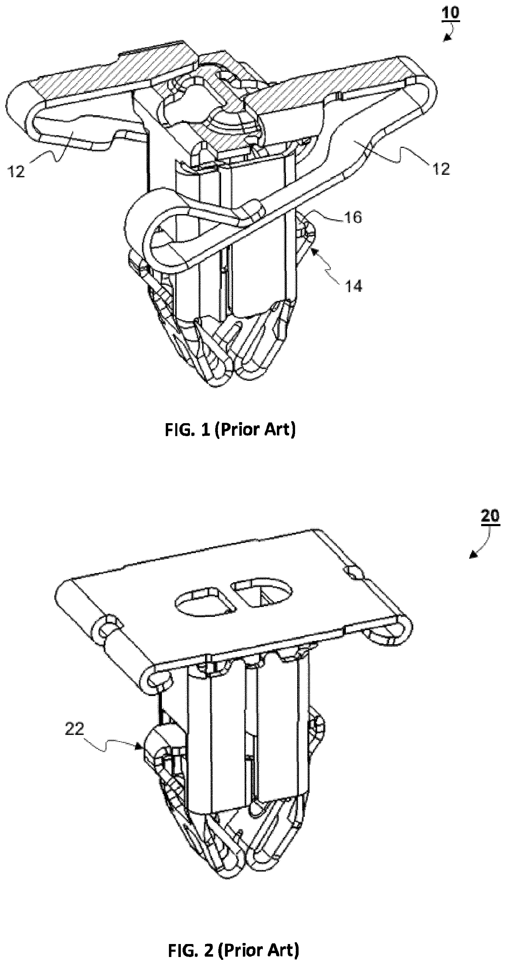

Figure 1, for example, illustrates a typical clip 10 used for the attachment of airbags, such as, side-impact or curtain airbags, that is of the type formed by a body from which extend flexible elements 12 typically bearing against the surface of the clip entered into the attachment panel of the vehicle. The clip 10 comprises laterally protruding tangs 14 having upper surfaces 16 configured to bear against an inner surface of the attachment panel so as to "sandwich" the panel surface between the flexible elements 12 and the upper surfaces 16 of the tangs 14. Clip 10 may be formed from a single folded and punched laminar surface, so as to form a three-dimensional body made from, for example, metal, such as, carbon steel.

However, clip 10 is designed in such a way that the top region (or head portion) does not provide sufficient area for the installer to safely and efficiently push the clip into the attachment panel. There are also exposed sharp edges on this top region which can lead to an uncomfortable insertion of the clip, or even potentially injure the installer during such insertion, i.e. when pushing the clip into an attachment panel opening.

Another fastener clip 20 typically used to attach airbags to a vehicle structure is illustrated in Figure 2. Fastening clip 20 comprises laterally protruding tangs 22 adapted to fixingly engage with the panel's inner surface when entered through a mounting aperture of the panel. Clip 20 is designed so as to either provide an unloaded connection, where the tangs 22 simply prevent the clip 20 from sliding out of the mounting aperture once installed, or where the connection is loaded only if the dimensions of the panel surface (thickness) and aperture (rectangular cut-out) are suitably matched to the clip design. In the event of an unloaded connection (i.e. without resilient springs), the bias or spring load may be provided by a different component of the airbag module. Usually, this different component is made in plastic which, for a spring effect under mechanical loads (strength, fatigue) may not perform as good as metal.

Also, even though clip 20 has a flat upper surface, sharp edges are exposed at the upper surface making it uncomfortable and even risk injuries to the installer when pushing the fastening clip 20 into the mounting aperture.

Fastening clips are also disclosed in the following documents: US 2013/0302087 A1, US 2020/0166061 A1, US 2018/0209454 A1, EP 3 748 169 A1, WO 2018/104421 A1.

Therefore, it is an object of the present invention to provide an improved and ergonomic fastening clip, suitable for attaching airbags, such as side-impact or curtain airbags, that robust and efficient, as well as, ergonomic and safe so as to minimise any potential risk to the user during assembly.

### Summary of the Invention

According to a first aspect of the present invention, there is provided a fastening clip for mounting a component part, such as an airbag, to a support structure, comprising:
a body portion, extending between an upper end region and a lower end region along a longitudinal axis, comprising at least one elastically deflectable retaining member, projecting laterally from said lower end region of said body portion so as to fixingly engage when inserted into an orifice of the support structure;
a head portion, provided at said upper end region of said body portion, comprising a rectangularly shaped plate member, having a flat upper surface extending in a transverse plane relative to said longitudinal axis, and at least two opposing resilient spring members extending transversely away from opposing first and second edges of said plate member and folded towards said lower end region of said body portion.

The fastening clip of the present invention provides the advantage of an ergonomic pushing surface without any exposed sharp edges that may damage other components in the application or the user during assembly. Further, the fastening clip of the present invention provides the advantage of combining spring arms with an ergonomic pushing surface adapted, so as to prevent exposure of any sharp edges to the user or other components while the construction still allows the use of a single (uniaxial) folded (and punched) laminar sheet material (e.g. metal).

Advantageously, said plate member may be configured for push engagement by a digit of a user.

According to the invention, each one of the two opposing resilient spring members is uniaxially folded about a respective first and second folding axis. Preferably, said first and second folding axis are perpendicular to said longitudinal axis. Even more preferably, said first and second folding axis are parallel to each other.
said plate member may further comprise a first fold extending from at least a centre portion of said first edge and folded towards said body portion. Preferably, said first fold may form a single fold about a first folding axis perpendicular to said longitudinal axis.

Advantageously, said plate member may further comprise a second fold extending from at least a centre portion of said second edge and folded towards said lower end region of said body portion. Preferably, said second fold may form a single fold about a second folding axis perpendicular to said longitudinal axis. Preferably, said second folding axis may be parallel to said first folding axis.

Advantageously, said plate member may further comprise at least one edge member extending from at least a central portion of each one of said first and second edges and folded towards said lower end region and said body portion. Preferably, said at least one edge member may extend from each one of said opposing first and second edges into forming said body portion.

Advantageously, at least one of said resilient spring members may be a flexion leg ending in a looped or folded end portion shaped, so as to minimise damage to the support structure and/or the user during assembly.

Advantageously, said resilient spring members may be provided at diagonally opposing corners of said plate member.

Advantageously, said body portion and said head portion may be formed from a single piece.

According to a second aspect of the present invention, there is provided a planar sheet material for forming a fastener clip, comprising a predetermined pattern of cut-outs, fold lines and apertures, configured to fold into a fastener clip according to the first aspect of the present invention.

Advantageously, said predetermined pattern of cut-outs, fold lines and apertures may be fabricated by any one of punching, stamping, cutting and bending.

### Brief Description of the Drawings

Example embodiments of the description will now be described, by way of example only, with reference to the accompanying drawings, in which:
**Figure 1** **(Prior Art)** is a perspective illustrations of a typical fastening clip used for attaching components, such as airbags, to a vehicle chassis;
**Figure 2** **(Prior Art)** is a perspective illustration of another typical fastening clip used for attaching components, such as airbags, to a vehicle chassis;
**Figure 3** shows a perspective view of an example embodiment of the fastening clip of the present invention, (a) top-side view, (b) bottom-side view, and (c) perspective top view with hatched pushing surface;
**Figure 4** is a perspective view of the fastening clip shown in Figure 3, (a) top view, (b) front view and (c) side view;
**Figure 5** is a side cross-sectional side-view of the fastening clip when installed with an attachment panel;
**Figure 6** is a perspective cross-sectional view of the fastening clip shown in Figure 5, i.e. when installed in an attachment panel, and
**Figure 7** illustrating an example embodiment of the sheet metal blank cut, punched and bent for forming the fastening clip (a) top view and (b) bottom view.

### Detailed description of the preferred embodiment(s)

The described example embodiment relates to a fastening clip suitable for securing paraphernalia and accessories. The embodiment(s) of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words *'right', 'left', 'lower', 'upper', 'front', 'rear', 'upward', 'down'* and *'downward'* designate directions in the drawings to which reference is made and are with respect to the described component when assembled and mounted. The words *'inner', 'inwardly'*and *'outer', 'outwardly'* refer to directions toward and away from, respectively, a designated centreline or a geometric centre of an element being described (e.g. central axis), the particular meaning being readily apparent from the context of the description.

Further, as used herein, the terms *'connected', 'attached', 'coupled', 'mounted'* are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, *"first", "second", "third"* etc. merely indicate that different instances of like objects are being referred to and are not intended to imply that the objects so described must be in a given sequence, either temporally, spatially, in ranking or in any other manner.

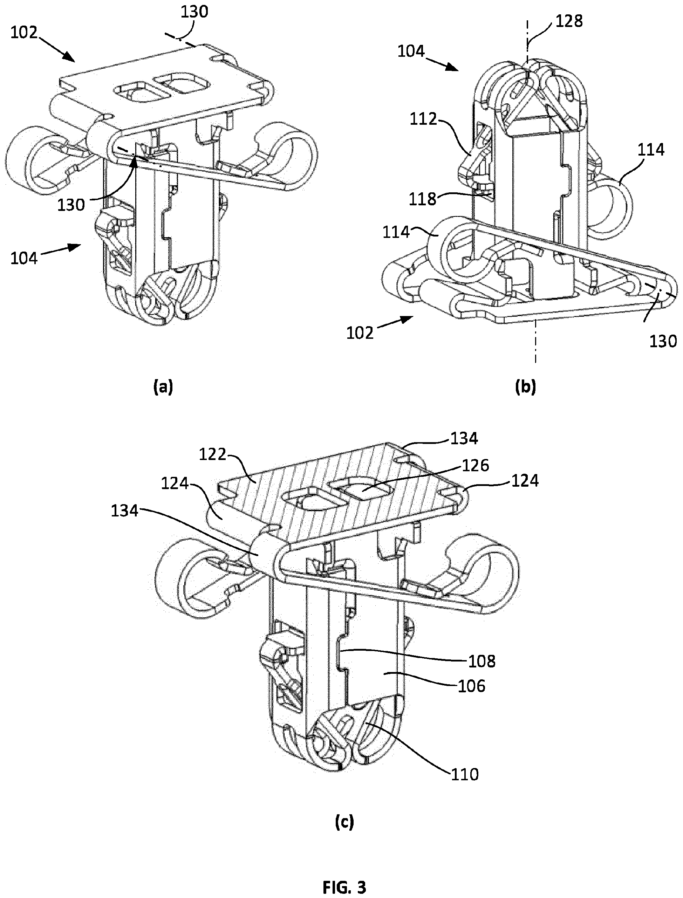

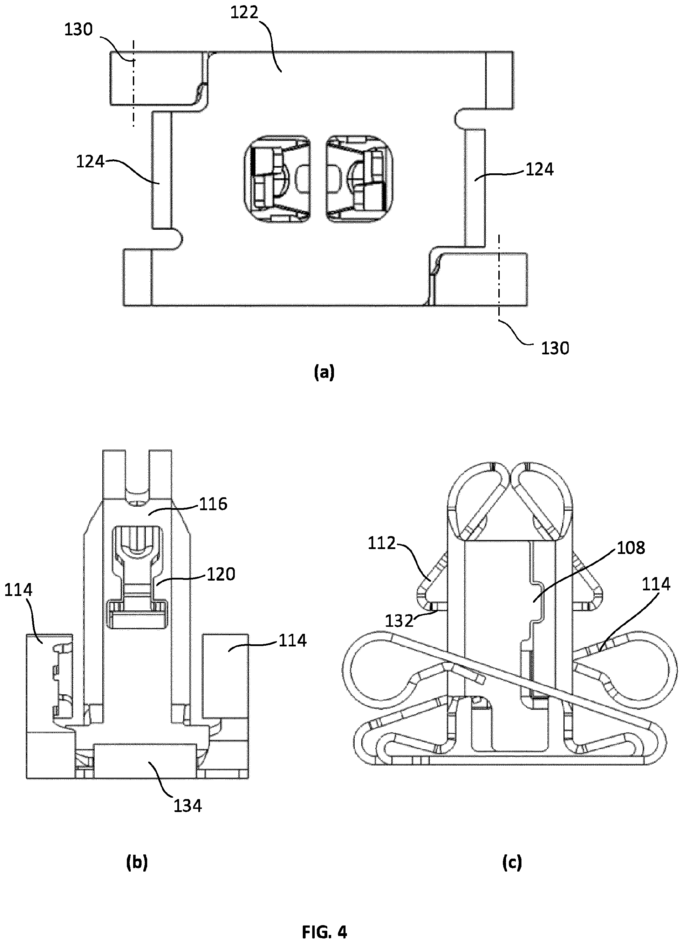

Referring now to Figures 3, 4, 5 and 6, an example embodiment of the fastening clip 100 is shown before it is used for assembly, i.e. when securing an airbag to an attachment panel. In particular, the clip 100 of the present invention comprises an improved airbag clip of the type of clips which are used for the attachment of airbags, such as, for example side-impact or curtain airbags, the air bag clips are of the type formed by a pre-cut 2D blank (patterned and cut for folding). The clip 100 has a head portion 102 from which extend flexible elements, such as spring elements 114, that, during use, are adapted to bear against an outer surface of an attachment panel 500 when the clip 100 enters an aperture 502 of the panel 500, and a body 104, comprising descending tangs 110 which give rise to different structures for the clip 100, such as, for example, side limbs 112 having surfaces configured to bear against an inner surface of the panel 500 in such a way that the supporting surfaces and those provided by the flexible spring elements 114 engage the attachment panel 500 on both sides, i.e. in the form of a sandwich, thus, enabling the clip 100 to be fixedly supported on the attachment panel 500. The improvements of the clip 100 comprise a pushing surface with an improved ergonomic shape, as well as, a head portion configured to protect from potential injuries during assembly. Furthermore, the improved airbag clip 100 has been simplified to include spring elements 114 extending directly from the head portion 102 and formed by a single fold of the spring elements 114 toward the distal end of the body 104

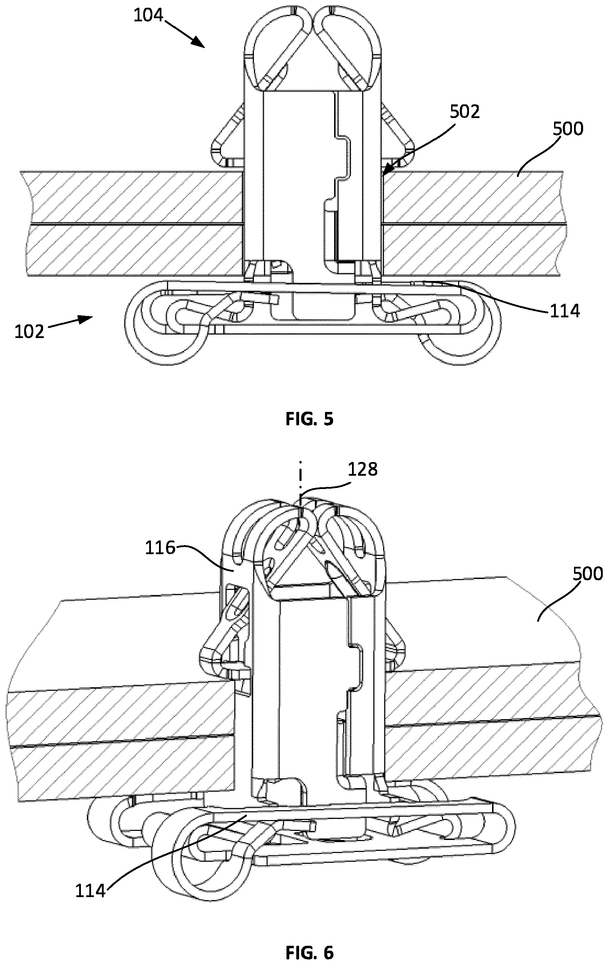

Clips 100 for airbags such as those according to this invention are inserted into an opening made in the surface of the attachment panel 500. This surface effectively divides the clip 100 into an upper outer part, i.e. the head portion 102, which is not inserted into the opening and an inner lower part, i.e. the body portion 104, which is inserted into the opening (see Figures 5 and 6). The upper part or head portion 102 of the clip 100 corresponds to the outer part and the lower part or body portion 104 of the clip 100 corresponds to the inner part. Likewise, the ascending direction is from the inner part to the outer (lower to upper) and the descending part is from the outer part to the inner (upper to lower). The body portion 104 may be formed by a box 106 that is formed by the union of two surfaces which are approximately "U"-shaped in transverse cross-section, being attached by one of their ends, and the attachment being strengthened by respective tabs 108 produced by division of the portions of the connecting part forming opposite surfaces. As may be seen from the attached figures, tabs 108 which are located within box 106 may have nails (not shown) that are shaped so as to engage in the openings provide in box 106.

Tangs 110 have an inclination towards the central axis 128 of the clip and extend downwards from box 106 towards the centre of clip 100 to then form a loop and extend away from the centre of the clip 100 in the opposite direction as ascending side limbs 112. In the preferred construction of the invention and as illustrated in the drawings, the loops of tangs 110 may be in contact with each other. This contact provides strength to the clip against pull-out forces.

Tangs 110 may have an enlarged surface 116, almost in the form of a triangle, which allows its base to extend beyond the walls forming box 106. This obviously prevents box 106 from "descending" under pressure and passing beyond those stops represented by the enlarged surface 116.

Side limbs 112 are configured to emerge from the inner part of box 106 towards the exterior of the same, through a hollow space, opening or window 118 made in its surface, creating a bearing surface 132 that is approximately parallel to the flat upper surface of the head portion 102 and which is configured to engage with the panel 500 (whin in use).

The sides of window 118 may have lateral tabs 120 which provide a support for the bearing surfaces 132 of box 106 against the inner surface of the panel 500 in response to forces which tend to extract clip 100.

The upper part or head portion 102 of the clip 100 comprises a substantially rectangularly shaped plate 122 with a flat upper surface. The plate 122 is arranged transverse to a longitudinal axis 128 of the body portion 104. Resilient spring elements 114 (i.e. flexion leg) extend transversely away from opposing edges at diagonally opposing corners of the plate 122. Each spring element 114 is folded towards the body portion 104, so as to form an obtuse angle with the flat upper surface of the plate 122. Respective folds are uniaxial about a single axis 130 that is perpendicular to the longitudinal axis 128 of the clip 100. The fold of the spring elements 114 forms a rounded side edge 134 of the plate 122. Further, a distal end portion of each spring element 114 is looped back, so as to form a rounded spring element end (i.e. a tear-drop hem).

A central portion 124 of two opposing protruding side edges of the plate 122 is folded towards and merging into a respective side of the body portion 104 (i.e. forming the box 106), so as to form a rounded side edge (e.g. a closed or open hem).

In addition, the plate 122 may be provided with two centrally aligned apertures 126, so as to allow access to the inner part of box 106.

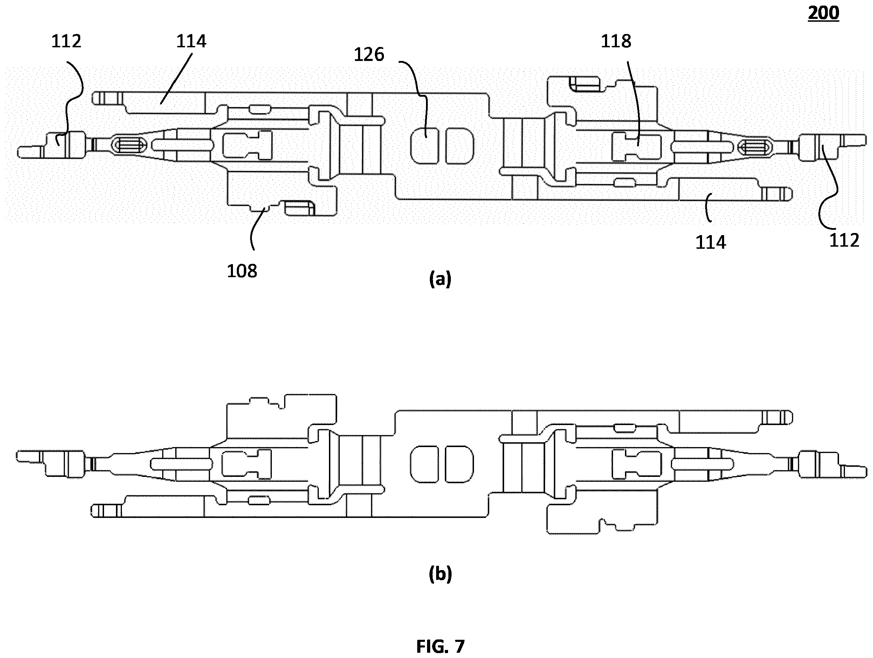

Referring now to Figures 7 (a) and (b), the clip 100 may be formed from a single laminar surface 200 (i.e. a sheet material or blank) that is cut and punched in a unique way, so as to allow forming a three-dimensional embodiment of the clip 100 by simply folding respective cut or punched portions of the sheet material 200 at predetermined fold lines. In particular, the laminar surface (i.e. sheet material or blank) may be a sheet metal blank 200 comprising predetermined cuts, bends and apertures that when folded form the specific parts and portions of the three-dimensional clip 100. Figure 7 includes the reference signs pointing to the 2D portion of the parts of the clip 100 once formed. The sheet metal material may be cut, punched, stamped or bent utilising suitable tooling (e.g. press, drills, laser cutting etc.).

It is understood by the person skilled in the art, that the unique cut-out pattern of the sheet metal allows for a clip with two spring elements 114 extending directly from the plate 122 of the head portion 102 and uniaxially bent about a single axis 130 that is perpendicular to the longitudinal centre axis 128 of the clip 100, thus, minimising the material required to form the intended shape (and functionality) of the clip 100.

The laminar surface or sheet metal blank may be made from a metal, such as, for example, carbon steel which has been heat treated to impart improved strength qualities to it. Further, clip 100 may undergo treatment to prevent corrosion and/or receive a suitable coating in order to improve its service life and wear in relation to dust, moisture and other elements which might attack the clip.

During assembly, the user simply pushes the fastening clip 100 into the mounting aperture 502 of the attachment panel 500 thus fixingly engaging the side limbs 112 with an inner surface of the attachment panel 500. The flat surface and round edges of the plate 122 provide an ergonomic pushing surface adapted to minimise potential injuries to the user during assembly.

It will be appreciated by persons skilled in the art that the above embodiment(s) have been described by way of example only and not in any limitative sense, and that various alterations and modifications are possible without departing from the scope of the invention as defined by the appended claims.

### Reference List

- 100: fastening clip
- 102: head portion
- 104: body
- 106: box
- 108: body tabs
- 110: tang
- 112: Side limbs
- 114: Spring elements
- 116: enlarged surface
- 118: Window / body aperture
- 120: lateral tabs
- 122: Plate (head portion)
- 124: central edge of plate134
- 126: apertures
- 128: longitudinal axis
- 130: single axis (fold)
- 132: bearing surface
- 134: rounded side edge
- 200: 2D blank
- 500: attachment panel
- 502: mounting aperture

## Claims

1. A fastening clip (100) for mounting a component part, such as an airbag, to a support structure (500), comprising:
a body portion (104), extending between an upper end region and a lower end region along a longitudinal axis (128), comprising at least one elastically deflectable retaining member (112), projecting laterally from said lower end region of said body portion (104), so as to fixingly engage when inserted into an orifice (502) of the support structure (500);
a head portion (102), provided at said upper end region of said body portion (104), comprising a rectangularly shaped plate member (122), having a flat upper surface extending in a transverse plane relative to said longitudinal axis (128), and two opposing resilient spring members (114) extending transversely away from opposing first and second edges of said plate member (122) and folded towards said lower end region of said body portion (104), and
wherein each one of said two opposing resilient spring members (114) is uniaxially folded about a respective first and second folding axis (130).

2. A fastening clip according to claim 1, wherein said plate member (122) is configured for push engagement by a digit of a user.

3. A fastening clip according to claim 1 or claim 2, wherein each one of said first and second folding axis (130) is perpendicular to said longitudinal axis (128).

4. A fastening clip according to any one of the preceding claims, wherein said first and second folding axis (130) are parallel to each other.

5. A fastening clip according to any one of the preceding claims, wherein said plate member (122) further comprises at least one edge member extending from at least a central portion (124) of each one of said first and second edges and folded towards said lower end region and said body portion (104).

6. A fastening clip according to claim 5, wherein said at least one edge member extends from each one of said opposing first and second edges into forming said body portion (104).

7. A fastening clip according to any one of the preceding claims, wherein at least one of said resilient spring members (114) is a flexion leg ending in a looped or folded end portion shaped so as to minimise damage to the support structure (500) and/or the user during assembly.

8. A fastening clip according to any one of the preceding claims, wherein said resilient spring members (114) are provided at diagonally opposing corners of said plate member (122).

9. A fastening clip according to any one of the preceding claims, wherein said body portion (104) and said head portion (102) are formed from a single piece.

10. A planar sheet material (200) for forming a fastener clip (100), comprising a predetermined pattern of cut-outs, fold lines and apertures, configured to fold into a fastener clip (100) according to any one of the preceding claims.

11. A planar sheet material according to claim 10, wherein said predetermined pattern of cut-outs, fold lines and apertures is fabricated by any one of punching, stamping, cutting and bending.

## Patentansprüche

1. Befestigungsclip (100) zum Anbringen einer Komponente, wie eines Airbags, an einer Stützstruktur (500), aufweisend:
einen Körperabschnitt (104), der sich zwischen einem oberen Endbereich und einem unteren Endbereich entlang einer Längsachse (128) erstreckt, der zumindest ein elastisch auslenkbares Halteelement (112) aufweist, das von dem unteren Endbereich des Körperabschnitts (104) seitlich vorsteht, sodass es in festem Eingriff ist, wenn es in eine Öffnung (502) der Stützstruktur (500) eingesetzt ist;
einen Kopfabschnitt (102), vorgesehen an dem oberen Endbereich des Körperabschnitts (104), der ein rechteckig geformtes Plattenelement (122), das eine flache obere Oberfläche aufweist, die sich in einer Querebene in Bezug auf die Längsachse (128) erstreckt, und zwei gegenüberliegende elastische Federelemente (114), die sich quer weg von gegenüberliegenden ersten und zweiten Kanten des Plattenelements (122) erstrecken und zu dem unteren Endbereich des Körperabschnitts (104) hin gefaltet sind, aufweist, und
wobei jedes der zwei gegenüberliegenden elastischen Federelemente (114) einaxial um eine jeweilige erste und zweite Faltachse (130) gefaltet ist.

2. Befestigungsclip nach Anspruch 1, wobei das Plattenelement (122) zur Druckeinrastung durch einen Finger eines Benutzers konfiguriert ist.

3. Befestigungsclip nach Anspruch 1 oder Anspruch 2, wobei jede von der ersten und der zweiten Faltachse (130) senkrecht zu der Längsachse (128) ist.

4. Befestigungsclip nach einem der vorhergehenden Ansprüche, wobei die erste und die zweite Faltachse (130) parallel zueinander sind.

5. Befestigungsclip nach einem der vorhergehenden Ansprüche, wobei das Plattenelement (122) ferner zumindest ein Kantenelement aufweist, das sich von zumindest einem zentralen Abschnitt (124) jeder von der ersten und der zweiten Kante erstreckt und zu dem unteren Endbereich und dem Körperabschnitt (104) hin gefaltet ist.

6. Befestigungsclip nach Anspruch 5, wobei sich das zumindest eine Kantenelement von jeder der gegenüberliegenden ersten und zweiten Kanten so erstreckt, dass es den Körperabschnitt (104) bildet.

7. Befestigungsclip nach einem der vorhergehenden Ansprüche, wobei zumindest eines der elastischen Federelemente (114) ein Beugeschenkel ist, der in einem geschlungenen oder gefalteten Endabschnitt endet, der so geformt ist, dass eine Beschädigung der Stützstruktur (500) und/oder des Benutzers während der Montage minimiert wird.

8. Befestigungsclip nach einem der vorhergehenden Ansprüche, wobei die elastischen Federelemente (114) an diagonal gegenüberliegenden Ecken des Plattenelements (122) vorgesehen sind.

9. Befestigungsclip nach einem der vorhergehenden Ansprüche, wobei der Körperabschnitt (104) und der Kopfabschnitt (102) aus einem einzigen Stück gebildet sind.

10. Flächiges Bogenmaterial (200) zum Bilden eines Befestigungsclips (100), das ein vorbestimmtes Muster aus Ausschnitten, Faltlinien und Öffnungen aufweist, das zur Faltung zu einem Befestigungsclip (100) nach einem der vorhergehenden Ansprüche konfiguriert ist.

11. Flächiges Bogenmaterial nach Anspruch 10, wobei das vorbestimmte Muster aus Ausschnitten, Faltlinien und Öffnungen durch eines von Stanzen, Prägen, Schneiden und Biegen hergestellt wird.

## Revendications

1. Pince de fixation (100) pour le montage d'un composant, tel qu'un airbag, sur une structure de support (500), comprenant :
une partie de corps (104), s'étendant entre une région d'extrémité supérieure et une région d'extrémité inférieure le long d'un axe longitudinal (128), comprenant au moins un élément de retenue élastiquement déformable (112), faisant saillie latéralement depuis ladite région d'extrémité inférieure de ladite partie de corps (104), de manière à venir en prise de manière fixe lorsqu'il est inséré dans un orifice (502) de la structure de support (500) ;
une partie de tête (102), disposée au niveau de ladite région d'extrémité supérieure de ladite partie de corps (104), comprenant un élément de plaque de forme rectangulaire (122), ayant une surface supérieure plate s'étendant dans un plan transversal par rapport audit axe longitudinal (128), et deux éléments de ressort élastiques opposés (114) s'étendant transversalement à l'écart des premier et second bords opposés dudit élément de plaque (122) et repliés vers ladite région d'extrémité inférieure de ladite partie de corps (104), et
dans lequel chacun desdits deux éléments de ressort élastiques opposés (114) est plié de manière uniaxiale autour d'un premier et d'un second axe de pliage respectifs (130) .

2. Pince de fixation selon la revendication 1, dans laquelle ledit élément de plaque (122) est configuré pour un engagement par poussée par un doigt d'un utilisateur.

3. Pince de fixation selon la revendication 1 ou la revendication 2, dans laquelle chacun desdits premier et second axes de pliage (130) est perpendiculaire audit axe longitudinal (128).

4. Pince de fixation selon l'une quelconque des revendications précédentes, dans laquelle lesdits premier et second axes de pliage (130) sont parallèles l'un par rapport à l'autre.

5. Pince de fixation selon l'une quelconque des revendications précédentes, dans laquelle ledit élément de plaque (122) comprend en outre au moins un élément de bord s'étendant depuis au moins une partie centrale (124) de chacun desdits premier et second bords et plié vers ladite région d'extrémité inférieure et ladite partie de corps (104).

6. Pince de fixation selon la revendication 5, dans laquelle ledit au moins un élément de bord s'étend depuis chacun desdits premier et second bords opposés pour la formation de ladite partie de corps (104).

7. Pince de fixation selon l'une quelconque des revendications précédentes, dans laquelle au moins un desdits éléments de ressort élastiques (114) est une patte de flexion se terminant par une partie d'extrémité en boucle ou pliée, formée de manière à minimiser les dommages à la structure de support (500) et/ou à l'utilisateur durant l'assemblage.

8. Pince de fixation selon l'une quelconque des revendications précédentes, dans laquelle lesdits éléments de ressort élastiques (114) sont disposés à des coins diagonalement opposés dudit élément de plaque (122).

9. Pince de fixation selon l'une quelconque des revendications précédentes, dans laquelle ladite partie de corps (104) et ladite partie de tête (102) sont formées d'une seule pièce.

10. Matériau en feuille plan (200) pour la formation d'une pince de fixation (100), comprenant un motif prédéterminé de découpes, de lignes de pliage et d'ouvertures, configuré pour se plier en une pince de fixation (100) selon l'une quelconque des revendications précédentes.

11. Matériau en feuille plan selon la revendication 10, dans lequel ledit motif prédéterminé de découpes, de lignes de pliage et d'ouvertures est fabriqué par l'un quelconque des procédés suivants : poinçonnage, estampage, découpe et pliage.
